Europäisches Patentamt

(19) European Patent Office

Office européen des brevets

(11) Publication number: **0 059 190**
**B1**

## (12) EUROPEAN PATENT SPECIFICATION

(45) Date of publication of patent specification: **22.05.85**

(51) Int. Cl.⁴: **F 16 J 15/50**

(21) Application number: **81902130.4**

(22) Date of filing: **13.07.81**

(86) International application number:
**PCT/US81/00940**

(87) International publication number:
**WO 82/00507 18.02.82 Gazette 82/06**

(54) **HERMETIC SEAL FOR COMPRESSORS OR THE LIKE.**

(30) Priority: **31.07.80 US 174201**

(43) Date of publication of application:
**08.09.82 Bulletin 82/36**

(45) Publication of the grant of the patent:
**22.05.85 Bulletin 85/21**

(84) Designated Contracting States:
**AT CH DE FR GB LI LU NL SE**

(56) References cited:
**DE-B-1 045 806**
**US-A-2 839 241**
**US-A-3 172 596**
**US-A-3 745 868**
**US-A-3 875 806**

(73) Proprietor: **BRAUN, Anton**
**6421 Warren Avenue**
**South Minneapolis, MN 55435 (US)**

(72) Inventor: **BRAUN, Anton**
**6421 Warren Avenue**
**South Minneapolis, MN 55435 (US)**

(74) Representative: **Hayward, Denis Edward Peter**
**et al**
**Lloyd Wise, Tregear & Co. Norman House**
**105-109 Strand**
**London WC2R OAE (GB)**

Courier Press, Leamington Spa, England.

## Description

This invention relates to hermetic seals for compressors and or the like, more particularly, for compressors for refrigeration or air conditioning systems. In such systems, a major problem has been in providing a suitable seal between the refrigerant in the compressor and the power unit for driving the refrigerant compressor piston. The use of a bellows having the closed end thereof welded or otherwise fixedly connected to a piston rod or lever, for operating a compressor piston in a cylinder, and its other end welded or otherwise fixedly connected to the open end of a cylinder, to provide a hermetic seal between the compression chamber of the cylinder and the exterior of the cylinder, is broadly old in the art. However, when long bellows are used in internal combustion engine driven piston types of compressors having long strokes, the bellows convolution nearest the piston suffers much more strain and flexing than the other convolutions. Normally, the maximum strain in each convolution decreases progressively from the piston end to the cylinder end. This is due to the fact that the accelerations of the power and compressor pistons are the greatest at the point of stroke reversal of the pistons, and, due to the mass of the numerous convolutions, they each lag behind the preceding convolution in responding to the movement of the pistons. These facts explain why bellows seals fail by the end convolution either tearing away from the piston or the walls thereof cracking.

Proposals have been put forward in the prior art to alleviate the problem. Thus, in United States Patent No. 2839241 there was proposed a construction in which the bellows was divided into three equal sections by two rigid diaphragms and the diaphragms were positively reciprocated by the main drive shaft through respective cranks and connection rods. The object was to displace the individual configurations of the bellows by amounts proportional to their distances from the fixed end. That is to say, the first and last configuration of each of the three bellow sections had a certain relative displacement and since the bellows sections were all exactly equal the value of said relative displacement was the same for each bellows section.

Another proposal in United States Patent No. 3875806 was intended to achieve a similar result. In that case the bellows was positively extended and contracted by a lazy tongs and this again had the effect of dividing the bellows into a plurality of sections with the relative displacement between the first and last configurations of each section exactly the same in all the sections.

The applicant has, however, discovered that these prior proposals do not equalise the stresses in the configurations of the different bellows sections due to inertial forces because the accelerations of the piston and piston rod are very nonlinear. Furthermore, should beat frequencies occur on occasions the maximum stress and strain could arise in almost any convolution. It is therefore an object of the present invention to achieve a better solution to the problem.

According to one aspect of the present invention, there is provided a hermetic seal for a compressor or the like having a cylinder with a reciprocable rod therein and power means for moving said rod back and forth a substantial distance along the axis of said cylinder, comprising a bellows surrounding said rod and extending between said rod and said cylinder, said bellows having a plurality of convolutions with one end of the bellows being sealingly connected to said rod and the other end of said bellows being sealingly connected to the periphery of the cylinder, and symmetrical motion transmitting means around said rod and extending between said rod and one or more intermediate portions of said bellows that will positively cause said intermediate portion or portions of said bellows to move when said one end of the bellows moves but at a slower speed or speeds and to a less distance from said other end of said bellows, characterised in that said intermediate portions of said bellows divide said bellows into two or more bellows sections wherein the numbers of convolutions in each bellows section are unequal.

According to another aspect, the invention provides a hermetic seal for a compressor or the like having a cylinder with a reciprocable rod therein and power means for moving said rod back and forth a substantial distance along the axis of said cylinder, comprising a bellows surrounding said rod and extending between said rod and said cylinder, said bellows having a plurality of convolutions with one end of the bellows being sealing connected to said rod and the other end of said bellows being sealingly connected to the periphery of the cylinder, and symmetrical motion transmitting means around said rod and extending between said rod and one or more intermediate portions of said bellows that will positively cause said intermediate portion or portions of said bellows to move when said one end of the bellows moves but at a slower speed or speeds and to a lesser distance from said other end of said bellows, characterised in that said intermediate portions of said bellows are positioned to divide said bellows into two or more bellows sections wherein the relative displacements between the first and the last convolution of each individual bellows section are different in different bellows sections.

It will therefore be understood that, contrary to the prior art, the aim of the present invention is to achieve unequal relative displacement between the first and large convolutions of the different bellows sections — to which end one may divide the bellows into unequal sections. This enables the displacements of the bellows convolutions to be matched more closely to the requirements of achieving substantially equal maximum inertial stresses in the different bellows sections.

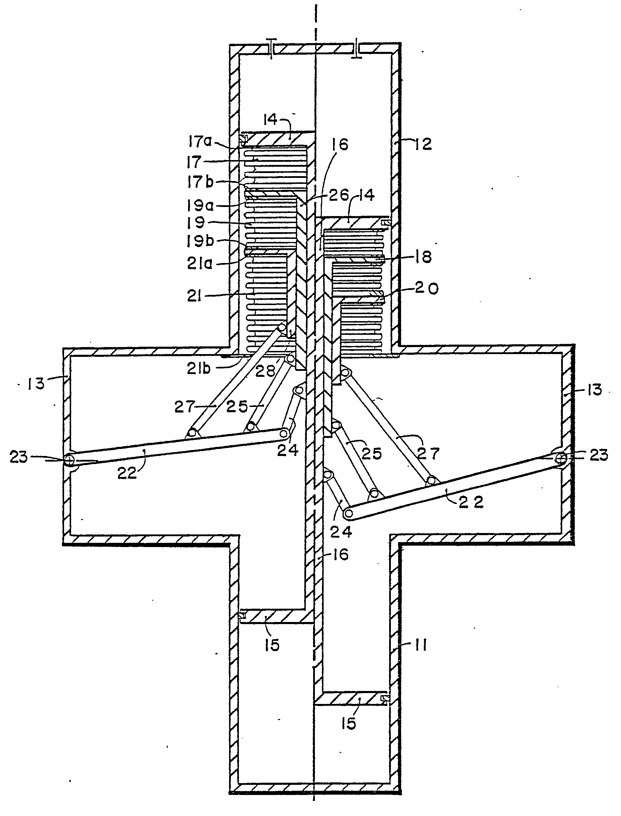

An arrangement in accordance with the invention will now be described by way of example and with reference to the accompanying drawing, which is a schematic diagram of one embodiment of the invention.

The preferred embodiment of the compressor is illustrated as having a conventional power cylinder 11, a conventional compression cylinder 12 and a connecting housing 13. A compressor piston 14 is connected to a power piston 15 by a piston rod 16. A first bellows section 17 has a radially inwardly extending end flange 17a sealingly connected to piston 14 and a second end flange 17b connected to a rigid diaphragm 18. A second bellows section 19 has radially inwardly extending end flanges 19a and 19b sealingly connected to the diaphragm 18 and a second rigid diaphragm 20, respectively. A third bellows section 21 has a radially inwardly extending end flange 21a and a radially outwardly extending end flange 21b sealingly connected to diaphragm 20 and the open end of cylinder 12, respectively.

A pair of main or control levers 22 are pivotally connected to opposite side walls of housing 13 at 23 and are pivotally connected at their inner ends to piston rod 16 through a first pair of links 24. A second pair of links 25 are pivotally connected to levers 22, each at an intermediate point along the length of the respective lever 22, and are also pivotally connected to the adjacent end of a tube 26 extending from diaphragm 18 to a position above links 24. A third pair of links 27 are pivotally connected to levers 22, each at a point between the pivotal connection of links 25 and the pivot 23, and are also pivotally connected to the adjacent end of a tube 28 extending from diaphragm 20 to a position above links 25.

The right half of the drawing shows the elements of the compressor in the positions they assume when the compressor piston is at the end of its suction stroke and the power piston is at the end of its compression stroke. Upon ignition of fuel in the cylinder 11, piston 14 will start to stretch bellows 17; diaphragm 18 will raise the lower convolutions of bellows section 17 and start to stretch bellows section 19; and diaphragm 20 will raise the lower convolutions of bellows section 19 and start to stretch bellows section 21.

Since the acceleration of the pistons decreases with the distance traveled, the stress on the convolutions of bellows section 21 will be minimal and the stress on the convolutions of bellows section 17, and on the convolution next to the piston 14 in particular, is also minimal when compared to what it would have been if no levers were provided to aid in the lifting of the lower convolutions of bellows section 17 and all of bellows sections 19 and 21. Diaphragms 20 will travel more than one third as far and as fast as piston 14.

In moving downward from the positions of the elements as illustrated in the left half of the drawing, at the end of the power and compression strokes of pistons 15 and 14, respectively, the convolutions of bellows section 17 would be badly flattened if it were not for the lowering of the lower convolutions of bellows section 17 and all of those of bellows sections 19 and 21. Also, due to the movement of tube 28 and diaphragm 20, the stress on the lowermost convolution and its connection with the cylinder is kept within a safe amount.

It is deemed apparent that only two bellows sections, with an appropriate lever and link arrangement, of four or more bellows sections, with corresponding lever and link arrangements, could be used, where different stroke lengths are involved. Also, other types of levers/links and pivotal arrangements may be used without departing from the scope of this invention. It is even possible to use hydraulic means to provide the functions performed by the illustrated lever arrangement. This would involve the use of a stepped cylinder with two or more steps with different diameter pistons connected to one or more intermediate convolutions of the bellows, to provide different speeds and travel lengths for the various convolutions, to produce the same functioning as in the lever arrangement.

Since the spring rates, natural frequency for given bellows sizes and numbers of bellows convolutions, acceleration rates and speeds are factors to be considered in the number and locations of the levers and links or other types of connections to the bellows, computation or experimentation may be used to determine the locations of the connections to give substantially equal maximum stress levels in each of the bellows sections. It will be observed, however, that the numbers of convolutions in the bellows sections are unequal and decrease in the direction toward the closed end of cylinder 12. That is to say, bellows section 21 has the largest number of convolutions, bellows section 19 has a smaller number, and bellows section 17 has a still smaller number. Or, in other words, the number of convolutions in each bellows section sequentially decreases from the bellows connection to the cylinder 12 to the bellows connection to the piston rod 16.

**Claims**

1. A hermetic seal for a compressor or the like having a cylinder (12) with a reciprocable rod (16) therein and power means (11, 15) for moving said rod back and forth a substantial distance along the axis of said cylinder, comprising a bellows (17, 19, 21) surrounding said rod and extending between said rod and said cylinder, said bellows having a plurality of convolutions with one end of the bellows being sealingly connected to said rod and the other end of said bellows being sealingly connected to the periphery of the cylinder, and symmetrical motion transmitting means (22, 24, 25, 27) around said rod and extending between said rod and one or more intermediate portions (18, 20) of said bellows that will positively cause said intermediate portion or portions of said bellows to move when said one end of the bellows moves but at a slower speed or speeds and to a lesser distance from said other end of said bellows, characterised in that said intermediate portions (18, 20) of said bellows divide said bellows into two or more bellows sections (17, 19, 21) wherein the numbers of convolutions in each bellows section are unequal.

2. A hermetic seal for a compressor or the like having a cylinder (12) with a reciprocable rod (16) therein and power means (11, 15) for moving said rod back and forth a substantial distance along the axis of said cylinder, comprising a bellows (17, 19, 21) surrounding said rod and extending between said rod and said cylinder, said bellows having a plurality of convolutions with one end of the bellows being sealingly connected to said rod and the other end of said bellows being sealingly connected to the periphery of the cylinder, and symmetrical motion transmitting means (22, 24, 25, 27) around said rod and extending between said rod and one or more intermediate portions (18, 20) of said bellows that will positively cause said intermediate portion or portions of said bellows to move when said one end of the bellows moves but at a slower speed or speeds and to a lesser distance from said other end of said bellows, characterised in that said intermediate portions (18, 20) of said bellows are positioned to divide said bellows into two or more bellows sections (17, 19, 21) wherein the relative displacements between the first and the last convolution of each individual bellows section are different in different bellows sections.

3. A hermetic seal as defined in Claim 1 or Claim 2, wherein the number of convolutions in each bellows section sequentially decreases from the bellows connection to said cylinder to the bellows connection to said rod.

4. A hermetic seal as defined in Claim 2, wherein the relative displacement between the first and the last convolutions of each of said bellows sections sequentially decreases section by section in the direction from the bellows connection to the cylinder to the bellows connection to said rod.

5. A hermetic seal as defined in any preceding Claim, wherein said motion transmitting means includes a main lever (22) pivoted on a fixed pivot (23) at one of its ends and pivotally connected to said rod (16) at its other end and a link or links (25, 27) pivotally connected to an intermediate portion or portions (18, 20) of said bellows and to said main lever (22) at a point or points intermediate its ends.

6. A hermetic seal as defined in Claim 5, wherein said link or each said link (25, 27) is pivotally connected to a tube (26, 28) that surrounds said rod (16) and the tube is connected to the respective intermediate portion of said bellows.

7. A hermetic seal as defined in any preceding Claim, including a compressor piston (14) connected to said rod (16).

8. A hermetic seal as defined in Claim 7, wherein said one end of said bellows is connected to said rod by being connected to the periphery of said compressor piston (14).

9. A hermetic seal as defined in any preceding Claim, wherein the bellows convolutions of maximum stress level in the two bellows sections on opposite sides of said intermediate portions or each said portions have substantially equal stress levels.

10. A hermetic seal as defined in Claim 1 or Claim 2, wherein said symmetrical motion transmitting means includes a tube or tubes disposed coaxially around said rod and extending axially from said intermediate portion or portions.

**Revendications**

1. Un dispositif hermétique pour un compresseur ou autre semblable ayant un cylindre (12) avec une tige de renvoi (16) à cet égard, et les besoins d'énergie (11, 15) pour manoeuvrer la dite tige d'une distance substantielle d'arriére en avant le long de l'axe du dit cylindre, comprenant un soufflet (17, 19, 21) entourant la dite tige et l'extention entre la dite tige et le dit cylindre, le dit soufflet ayant une multitude d'enroulements avec l'une des extrémités du soufflet qui est liée avec un dispositif a la dite tige, et l'autre extrémité du dit soufflet est reliée avec un dispositif à la périphérie du cylindre, les moyens de transmission de mouvements symétriques (22, 24, 25, 27) autour de la dite tige et son extention entre la dite tige et une ou plusieurs portions intermédiaire (18, 20) du dit soufflet provoqueront de façon positive la dite portion ou portions intermédiaires du dit soufflet à bouger, lorsque l'une des dites extrémités du soufflet bouge mais à une ou des vitesses plus lentes et à une distance moins grande à partir de la dite autre extrémité du dit soufflet, ceci est characterisé par les dites portions intermédiaires (18, 20) du dit soufflet qui divisent le dit soufflet en deux ou plusieurs sections de soufflet (17, 19, 21) dans lesquelles les nombres d'enroulements dans chaque section du soufflet son inégaux.

2. Un dispositif hermétique pour un compresseur ou autre semblable ayant de cylindre (12) avec un tige de renvoi (16) à cet égard, et les besoins d'energie (11, 15) pour manoeuvrer la dite tige d'une distance substantielle d'arriére en avant le long de l'axe du dit cylindre, comprenant un soufflet (17, 19, 21) entourant la dite tige et l'extention entre la dite tige et le dit cylindre, le dit soufflet ayant une multitude d'enroulements avec l'une des extrémités du soufflet qui est liées avec un dispositif à la dite tige et l'autre extrémité du dit soufflet est reliée avec un dispositif à la périphérie du cylindre, les moyens de transmission de mouvements symétriques (22, 24, 25, 27) autour de la dite tige et son extention entre la dite tige et une ou plusieurs portions intermédiaires (18, 20) du dit soufflet qui provoqueront de façon positive la dite portion ou portions intermédiaires du dit soufflet à bouger, lorsque l'une des dites extrémités du soufflet bouge mais à une ou des vitesses plus lentes et à une distance moins grande a partir de la dite autre extrémité du dit soufflet, ceci est charactérisé par les dites portions intermédiaires (18, 20) du dit soufflet qui sont placés pour diviser le dit soufflet en deux ou plusieurs sections de soufflet (17, 19, 21) dans lesquelles les déplacements relatifs entre le premier e le dernier enroulement de chaque section de soufflet sont différentes dans les diverses sections de soufflet.

3. Un dispositif hermétique comme definit dans la revendication 1 ou 2, dans lequel le nombre d'enroulement normal dans chaque section de soufflet décrôit à partir de la liaison du soufflet au dit cylindre à la liaison du soufflet à la dite tige.

4. Un dispositif hermétique comme définit dans la revendication 2, dans lequel le déplacement relatif entre le premier et le dernier enroulement de chacune des dites sections de soufflet décroissent substantiellement section par section dans le sens à partir de la liaison du soufflet au cylindre à la liaison du soufflet à la dit tige.

5. Le dispositif hermétique comme définit dans les revendications précédentes dans lequel les dits moyens de transmissions de mouvements comprenant le levier principale (22) pivotant sur un pivot fixe (23) à l'une des ses extrémités et à son autre extrémite lié de façon pivotante à la dite tige (16) et une liaison ou liaisons (25, 27) liée de façon pivotante à une portion ou portions intermédiaires (18, 20) du dit soufflet et au dit levier principale (22) au point ou points intermédiaires à ses extrémités.

6. Un dispositif hermétique comme définit dans la revendication 5, dans lequel la dit liaison ou chacune des dites liaisons (25, 27) est ou sont connectees de manière pivotante à un tube (26, 28) qui entoure la dite tige (16), et le tube est lié à la portion intermédiaire respective du dit soufflet.

7. Un dispositif hermétique comme définit dans les revendications précédentes comprenant un piston compresseur (14) lié à la dite tige (16).

8. Un dispositif hermétique comme définit dans la revendication 7, dans lequel la dite extrémité du dit soufflet est reliée à la dite tige en étant connectée à la périphérie du dit piston compresseur (14).

9. Un dispositif hermétique comme définit dans les revendications précédentes dans lequel les enroulements de soufflet au niveau de force maximum dans les deux sections de soufflets des parrois opposées de la dite portion intermédiaire ou de chacune de la dite portions ont substantiellement des niveaux de force égale.

10. Un dispositif hermétique comme définit dans la revendications 1 ou 2 dans lequel les dits moyens de transmission de mouvements comprenant un tube ou des tubes disposés de manière coaxiale autour de la dite tige et s'étendant dans l'axe à partir de la dite portion ou portions intermédiaires.

## Patentansprüche

1. Hermetische Dichtvorrichtung für einen Kompressor oder ähnliches mit einem Zylinder (12), einer darin angeordneten, sich hin- und herbewegenden Stange (16) und einer Antriebsvorrichtung (11, 15) zur Bewegung der Stange vor- und rückwärts um eine nennenswerte Entfernung entlang der Achse des Zylinders, mit einem die Stange umgebenden und sich zwischen der Stange und dem Zylinder erstreckenden Balg (17, 19, 21), welcher mehrere Falten aufweist und dessen eines Ende dichtend mit der Stange und dessen anderes Ende dichtend mit dem Umfang des Zylinders verbunden ist, und mit einer um die Stange angeordneten symmetrischen, die Bewegung übertragenden Vorrichtung (22, 24, 25, 27), welche sich zwischen der Stange und einem oder mehreren Zwischenabschnitten (18, 20) des Balges erstreckt, die zwangsläufig den Zwischenabschnitt oder die Zwischenabschnitte des Balges zur Bewegung veranlaßt, wenn sich das eine Ende des Balges bewegt, jedoch mit einer geringeren Geschwindigkeit oder mit geringeren Geschwindigkeiten und mit einem geringeren Abstand von dem anderen Ende des Balges, dadurch gekennzeichnet, daß die Zwischenabschnitte (18, 20) des Balges den Balg in zwei oder mehrere Balgabschnitte (17, 19, 21) aufteilen, wobei die Anzahl der Falten in jedem Balgabschnitt ungleich ist.

2. Hermetische Dichtvorrichtung für einen Kompressor oder ähnliches mit einem Zylinder (12), einer darin angeordneten, sich hin- und herbewegenden Stange (16) und einer Antreibsvorrichtung (11, 15) zur Bewegung der Stange vor- und rückwärts um eine nennenswerte Entfernung entlang der Achse des Zylinders, mit einem die Stange umgebenden und sich zwischen der Stange und dem Zylinder erstreckenden Balg (17, 19, 21), welcher mehrere Falten aufweist und dessen eines Ende dichtend mit der Stange und dessen anderes Ende dichtend mit dem Umfang des Zylinders verbunden ist, und mit einer um die Stange angeordneten symmetrischen, die Bewegung übertragenden Vorrichtung (22, 24, 25, 27), welche sich zwischen der Stange und einem oder mehreren Zwischenabschnitten (18, 20) des Balges erstreckt, die zwangsläufig den Zwischenabschnitt oder die Zwischenabschnitte des Balges zur Bewegung veranlaßt, wenn sich das eine Ende des Balges bewegt, jedoch mit einer geringeren Geschwindigkeit oder mit geringeren Geschwindigkeiten und mit einem geringeren Abstand von dem anderen Ende des Balges, dadurch gekennzeichnet, daß die Zwischenabschnitte (18, 20) des Balges zur Unterteilung des Balges in zwei oder mehrere Balgabschnitte (17, 19, 21) angeordnet sind, wobei die relativen Verschiebungen zwischen der ersten und der letzten Falte jedes einzelnen Balgabschnittes in unterschiedlichen Balgabschnitten unterschiedlich sind.

3. Hermetische Dichtvorrichtung gemäß Anspruch 1 oder 2, bei welcher die Anzahl von Falten in jedem Balgabschnitt nacheinander von der Verbindung des Balges mit dem Zylinder zu der Verbindung des Balges mit der Stande hin abnimmt.

4. Hermetische Dichtvorrichtung gemäß Anspruch 2, bei welcher die relative Verschiebung zwischen der ersten und der letzten Falte jedes der Balgabschnitte nacheinander abschnittsweise in der Richtung von der Verbindung des Balges mit dem Zylinder hin zur Verbindung des Balges mit der Stange abnimmt.

5. Hermetische Dichtvorrichtung gemäß einem der voranstehenden Ansprüche, bei welcher die die Bewegung übertragende Vorrichtung einen an seinem einen Ende drehbar an einem festen Drehpunkt (23) und drehbar mit seinem anderen Ende an der Stange festgelegten Haupthebel (22) umfaßt sowie ein Glied oder Glieder (25, 27), welche drehbar an einem Zwischenabschnitt oder Zwischenabschnitten (18, 20) des Balges und an dem Haupthebel (22) an einer Stelle oder Stellen zwischen dessen Enden festgelegt sind.

6. Hermetische Dichtvorrichtung gemäß Anspruch 5, dadurch gekennzeichnet, daß das oder jedes Glied (25, 27) drehbar an einem Rohr (26, 28) festgelegt ist, welches die Stange (16) umgibt, und daß das Rohr mit dem betreffenden Zwischenabschnitt des Balges verbunden ist.

7. Hermetische Dichtvorrichtung gemäß einem der voranstehenden Ansprüche, welche einen mit der Stange (16) verbundenen Kompressorkolben (14) umfaßt.

8. Hermetische Dichtvorrichtung gemäß Anspruch 7, bei welcher ein Ende des Balges mittels einer Verbindung mit dem Umfang des Kompressorkolbens (14) mit der Stange verbunden ist.

9. Hermetische Dichtvorrichtung gemäß einem der voranstehenden Ansprüche, bei welcher die Balgfalten mit maximalen Dehnungspegel in den beiden Balgabschnitten auf gegenüberliegenden Seiten des beziehungsweise jeden Zwischenabschnitts im wesentlichen gleiche Dehnungspegel aufweisen.

10. Hermetische Dichtvorrichtung gemäß Anspruch 1 oder 2, bei welcher die symmetrische, die Bewegung übertragende Vorrichtung ein Rohr oder Rohre umfaßt, welches bzw. welche koaxial um die Stange angeordnet ist bzw. sind und sich axial von dem Zwischenabschnitt oder den Zwischenabschnitten aus erstreckt bzw. erstrecken.